# EUROPÄISCHE PATENTANMELDUNG

(11) **EP 1 107 419 A2**
(43) Veröffentlichungstag der Anmeldung: **13.06.2001**
(21) Anmeldenummer: 00126785.5
(22) Anmeldetag: 06.12.2000
(51) Int. Cl.: H02J 7/00

(54) **Verfahren und Vorrichtung zur sicheren Fremdstarthilfe bei Kraftfahrzeugen und dergleichen**

(30) Priorität: 08.12.1999 DE 19958998
(71) Anmelder: Delphi Technologies, Inc., Troy, MI 48007 (US)
(72) Erfinder: Mäckel, Rainer, Dr., 53639 Königswinter (DE); Schulz, Thomas, Dipl.-Ing., 72669 Unterensingen (DE); Alksnat, Holger, 58285 Gevelsberg (DE); Dinger, Jürgen, 42899 Remscheid (DE)
(74) Vertreter: Manitz, Finsterwald & Partner

(57) **Zusammenfassung**

Ein Verfahren zur sicheren Fremdstarthilfe bei Bordnetzen von beweglichen Einheiten, Kraftfahrzeugen, Booten und dergleichen ist dadurch gekennzeichnet, dass ein Fremdstartstützpunkt (FSS) anfänglich nicht oder nur schwach bestromt wird und erst durch den Anschluss der Klemme eines Starthilfekabels in einen aktiven Zustand überführt wird, in welchem eine direkte galvanische Verbindung mit Bordnetz und/oder Batterie hergestellt ist. Der Fremdstartstützpunkt ist vorzugsweise dreiteilig ausgebildet.

## Beschreibung

Die Erfindung betrifft ein Verfahren und eine Vorrichtung zur sicheren Fremdstarthilfe bei Bordnetzen von beweglichen Einheiten nach dem Oberbegriff des Anspruchs 1.

Um eine sichere Fremdstarthilfe bei Bordnetzen von beweglichen Einheiten zu gewährleisten, ist es vor allen Dingen erforderlich, sowohl die bordnetzeigene Batterie als auch das Bordnetz selbst gegen hierdurch herbeigeführte Störungen, insbesondere Verpolung oder Kurzschluss zu schützen, sowohl für den Fall, dass eine Fremdstarthilfe von einem gegebenen Fahrzeug geleistet wird, oder dass dieses Fahrzeug Fremdstarthilfe in Anspruch nehmen muss, weil die eigene Bordnetzbatterie für einen Startversuch nicht mehr über die erforderliche Kapazität verfügt, beispielsweise also zu stark entladen ist.

Da bei in einem Kraftfahrzeug angeordneten handelsüblichen Batterien ein mechanischer Schutz gegen Verpolung bzw. Kurzschlüsse nicht realisierbar ist und eine Verpolung an sich grundsätzlich auch nicht bei einem Starthilfeversuch ausgeschlossen werden kann, die beispielsweise durch Unachtsamkeit einer Bedienungsperson verursacht wird, ist es für sich gesehen bekannt, einzelne Bauelemente oder einzelne Baugruppen, die beispielsweise besonders empfindlich auf eine Verpolung reagieren, durch in Reihe geschaltete Dioden gegen Verpolschäden zu schützen. Nachteilig ist hierbei allerdings, dass bei höheren Strömen die Verlustleistung der Schutzdioden stark ansteigt.

Es ist auch bekannt (DE 39 30 896 A1), Reihenschaltungen von zu schützenden Elementen mit invers geschalteten MOSFET's vorzusehen, wodurch sich geringere Verlustleistungen ergeben. Eine solche Lösung ist allerdings sehr kostspielig.

Bekannt ist ferner (DE 29 19 022 A1) ein Generatorsystem und/oder Verbraucher gegen eine Beschädigung durch ein Anschließen einer falsch gepolten Spannungsquelle, nämlich Batterie oder dergleichen, dadurch zu schützen, dass eine Einreichtung zur Erkennung der Falschpolung vorgesehen ist, die aus einer Serienschaltung eines Verpolschutzrelais und einer Verpolschutzdiode besteht. Das Relais benötigt im eingeschalteten Zustand jedoch eine relativ hohe Ansteuerleistung und weist zudem einen relativ hohen Einschaltwiderstand auf, so dass im Startfall mit einer Verschlechterung der Systemeigenschaften zu rechnen ist. Ausserdem besteht bei einem Relais beim Abschalten von hohen Strömen die Gefahr des Verschweissens der Schaltkontakte.

Schließlich weist eine weitere bekannte Schaltungsanordnung (DE 197 19 919 A1) zum Schutz von Verbrauchern vor Verpolungsschäden in einem Bordnetz ein Begrenzungselement und eine Auslöseeinheit auf, wobei das Begrenzungselement parallel zum Bordnetz geschaltet ist und bei falsch gepolter Spannung die Bordnetzspannung auf einen vorgegebenen Wert begrenzt, der für sonstige elektronische Einheiten noch nicht schädlich ist. Durch diese Begrenzung baut sich ferner eine Spannung am Begrenzungselement auf, die dazu benutzt wird, einen Schalter zu öffnen.

Weitere bekannte Verpolschutzanordnungen, die jedoch im vorliegenden Zusammenhang keine größere Bedeutung haben und auf die daher auch nicht näher eingegangen wird, lassen sich ferner den folgenden Veröffentlichungen entnehmen: DE 42 31 970 C2, DE 30 30 700 A1, DE 33 13 051 A1, DE 34 08 657 A1, DE 196 03 117 A1.

Grundsätzlich ist der Einsatz bestimmter Bauelemente in modernen Bordnetzen, insbesondere von Elektrolytkondensatoren oder Halbleiter-Leistungsschalter auf MOSFET-Basis in Kraftfahrzeugbordnetzen durch die Gefahr der Verpolung eingeschränkt. Bei einem Elektrolytkondensator kann eine solche Verpolung zur explosionsartigen Zerstörung des Kondensators mit den entsprechenden Folgeschäden führen, bei Halbleiterschaltern hingegen kann es im Verpolungsfall zu einem hohen Stromfluss über die Rückwärtsdiode der üblichen MOS-Transistoren kommen, was zu einer Zerstörung der Schalter und/oder zu einem ungewollten Einschalten von Verbrauchern führen kann. Besonders kritisch sind hier Brückenschaltungen.

Andererseits werden sowohl Elektrolytkondensatoren als auch Halbleiterelemente zunehmend im Bordnetzbereich von Fahrzeugen eingesetzt, wobei insbesondere bei Elektromotoren, die über Pulsweitenmodulationen geregelt werden, die hohen Schaltfreuqenzen mit Hilfe von Halbleiterschaltern erzeugt werden. Der Einsatz von Elektrolytkondensatoren dient dem Vermeiden von Rückwirkungen auf das Bordnetz.

Der Erfindung liegt daher die Aufgabe zugrunde, eine Möglichkeit zur einfachen und sicheren Durchführung von Fremdstarts bei Bordnetzen, insbesondere von Kraftfahrzeugen, zur Verfügung zu stellen, wobei durch Fehlbedienung, die auf von Benutzern verursachte Verpolungen und/oder Kurzschlüsse zurückzuführen sind, keine Schäden entstehen.

Die Erfindung löst diese Aufgabe mit den kennzeichnenden Merkmalen des Anspruchs 1 bzw. des Anspruchs 2 und hat den Vorteil, dass ein spezieller Fremdstartstützpunkt, also eine sich vorzugsweise im Motorraum bzw. Batterienähe befindende Kontaktstelle zur Verbindung mit der Klemme eines Fremdstarthilfekabels im Normalfall keine Verbindung mit dem Bordnetz aufweist bzw. nur über einen schädliche Einflüsse abblockenden Widerstand mit der fahrzeugeigenen Batterie verbunden ist und erst im Falle des tatsächlichen Anklemmens eines Fremdstarthilfekabels aktiviert wird. Stellt sich in diesem Zusammenhang dann heraus, dass ein Bedienungsfehler (Verpolung oder Kurzschluss) verursacht worden ist, wird die Verbindung mit Bordnetz bzw. Batterie des hilfebedürftigen Fahrzeugs nicht hergestellt oder sofort aufgetrennt, ohne dass es zu Schäden an empfindlichen Geräten oder Einrichtungen des Bordnetzes kommen kann.

Vorteilhaft ist ferner, dass dieser Fremdstartstützpunkt gleichermaßen zur Fremdstarthilfe bei Fremdfahrzeugen eingesetzt werden kann, da bei Anschluss einer Klemme an den Fremdstartstützpunkt gleichzeitig eine Isolierstelle überbrückt und durch Ansprechen eines Hochstromrelais die Schaltverbindung mit der bordeigenen Batterie hergestellt wird.

Dabei ist vorteilhaft, dass durch die Erfindung gewährleistet ist, dass beliebiges fehlerhaftes Vorgehen durch einen Benutzer ohne zerstörerische Schäden bleibt, gleichgültig, ob der Benutzer zunächst - vermeintlich - die beiden Pluspole oder die beiden Minuspole miteinander verbindet oder einen Kurzschluss verursacht. Im Falle einer Verpolung oder auch bei Kurzschluss fällt das Hochstromrelais auf jeden Fall ab, wobei es möglich ist, die Ein-/Ausschaltschwelle durch eine entsprechende Anzahl von dem Hochstromrelais vorgeschalteten Dioden auf Wunsch zu verschieben.

Vorteilhaft ist ferner, dass alle denkbaren Kombinationen von Fahrzeugen möglich sind - also ein beliebiges Standardfahrzeug startet ein mit dem Fremdstartstützpunkt nach der Erfindung ausgestattetes Fahrzeug, ein Fahrzeug mit dem Fremdstartstützpunkt startet Standardfahrzeug oder ein Fahrzeug mit Fremdstartstützpunkt startet ein Fahrzeug ebenfalls mit Fremdstartstützpunkt - ohne dass der Fahrer irgendeine Sicherheitshandlung (ausser dem Anklemmen des Kabels) machen muss.

Die Erfindung gewährleistet schließlich auch die Erkennung eines Abklemmens des Starthilfekabels, wodurch das Hochstromrelais seinen Schalter ebenfalls öffnet und die direkte Bordnetzverbindung zum Fremdstartstützpunkt auftrennt.

Weitere Vorteile und Merkmale der Erfindung werden im Zusammenhang mit der Zeichnung näher erläutert.

Die Zeichnung zeigt in
- Fig. 1: eine grundsätzliche Prinzipschaltung zur Verpolsicherung und
- Fig. 2: die Möglichkeit einer automatischen Fremdstarterkennung mit Speicherung des Vorgangs und Warnmeldung an den Benutzer des Fahrzeugs.

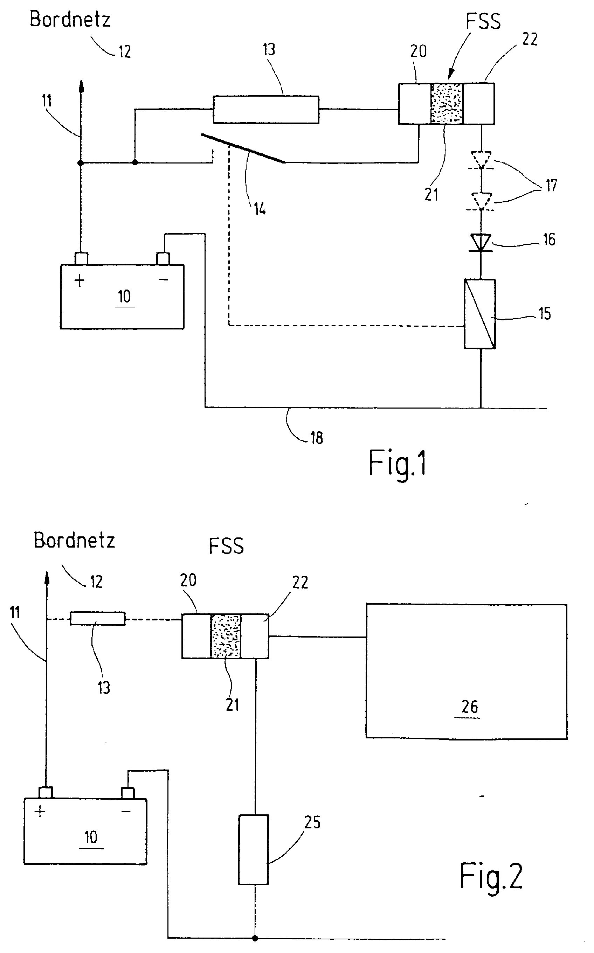

Das Ausführungsbeispiel in Fig. 1 zeigt die Batterie 10, die über eine Leitung 11 direkt mit dem Bordnetz 12 verbunden ist und über eine Zweigleitung, in welcher sich ein Widerstand 13 befindet, mit einem Kontaktanschluss 20 des Fremdstartstützpunktes FSS verbunden ist.

Der Fremdstartstützpunkt FSS ist dreiteilig und verfügt über zwei Kontaktanschlüsse 20 und 22, die durch ein nichtleitendes Element oder eine isolierende Trennschicht 21 galvanisch voneinander isoliert sind. Ferner führt vom Kontaktanschluss 20 des Fremdstartstützpunktes eine das Schaltelement 14 eines Hochstromrelais 15 aufweisende Parallelleitung zum Pluspol von Batterie und Bordnetz, umgeht also den Widerstand 13, während das Hochstromrelais 15 selbst mit seinem einen Anschluss an der gemeinsamen Minusleitung 18 des Bordnetzes und mit seinem anderen Anschluss über eine Verpolschutzdiode 16 und eine beliebige Anzahl weiterer Dioden 17 an den anderen Kontaktanschluss 22 des Fremdstartstützpunktes angeschlossen ist. Die Grundfunktion in Verbindung mit einem solchen dreigeteilten Fremdstartstützpunkt ist dann so, dass die Verbindung zwischen den beiden leitenden Kontaktanschlüssen 20, 22 des Fremdstartstützpunktes grundsätzlich dann hergestellt wird, wenn der Fremdstartstützpunkt FSS mit der (nicht dargestellten) Klemme eines Starthilfekabels verbunden wird.

Es können sich dann mehrere Möglichkeiten ergeben, deren erste darin besteht, dass mit Hilfe des Fremdstartstützpunktes einem Fremdfahrzeug Fremdstarthilfe zu leisten ist. Wird in diesem Fall der Fremdstartstützpunkt mit der Klemme eines Starthilfekabels verbunden, dann wird erkannt, dass ein Fremdstart durchgeführt werden soll und der Schalter 14 wird über die jetzt hergestellte leitende Verbindung vom Pluspol der Batterie über den Widerstand 13, den Kontaktanschluss 20 zum Kontaktanschluss 22 und die leitend gepolten Vordioden 16, 17 zum Hochstromrelais 15 geschlossen, so dass entsprechende Starthilfe geleistet werden kann.

Muss das dargestellte Bordnetz selbst Starthilfe in Anspruch nehmen, dann ergeben sich bei zunächst angenommener ordnungsgemäßer Polung die gleichen Zustände wie soeben geschildert; erfolgt eine Falschpolung, dann muss wieder mit zwei Möglichkeiten gerechnet werden, dass nämlich zunächst das minusleitende Kabel mit der Minusschiene 18 des Bordnetzes verbunden wird, welches aber im Falle einer Verpolung positive Spannung führt. Wird anschließend das andere Starthilfekabel, welches im Verpolungsfall fehlerhaft den Minusanschluss bildet, mit dem Kontaktanschluss 22 (und gleichzeitig mit dem Kontaktanschluss 20) verbunden, dann werden erst in diesem Augenblick die beiden Kontaktanschlüsse 20, 22 durchverbunden, was jedoch wirkungslos bleibt, weil über die Verpolschutzdiode 16 und die entsprechend weiteren vorgeschalteten Dioden 17 zur Verschiebung der Ein-/Ausschaltschwelle ein Ansprechen des Hochstromrelais 15 verhindert wird. Der Schalter 14 wird also gar nicht geschlossen, so dass eine echte Verpolungsgefahr nicht auftritt.

Die zweite Möglichkeit besteht darin, dass zunächst die Klemme an den Fremdstartstützpunkt angelegt wird, so dass der Schalter 14 zwar aufgrund der Durchverbindung der Kontaktanschlüsse 20, 22 anspricht und die Schaltverbindung zur Batterie 10 des Bordnetzes hergestellt wird; erfolgt jedoch anschließend - wiederum fehlerhaft - der Anschluss des Pluspols des Starthilfekabels an die Minusschiene 18, dann fällt das Hochstromrelais 15 ab, da die Spannung am Kontaktanschluss 22 aufgrund der Verpolung sinkt. Der Grenzwert kann hierbei in weiten Grenzen (beispielsweise zwischen 9 V und ca. 2 V) mit Hilfe der weiteren Dioden 17 verschoben werden. Auch in diesem Fall kommt es also nicht zu einer Verpolung im Bordnetz. Die gleichen Überlegungen gelten bei einem Kurzschluss der Klemmen des Starthilfekabels sinngemäß. Auch in diesem Fall fällt die Spannung auf ein Niveau, das eine Erregung des Hochstromrelais ausschließt. Schließlich erkennt die Schaltung ein Abklemmen des Starthilfekabels, da hierdurch die Verbindung der Kontaktanschlüsse 20, 22 des Fremdstartstützpunktes aufgelöst wird, woraufhin das Relais 15 abfällt und der Schalter 14 wieder öffnet und nur noch der Kontaktanschluss 20 über den Widerstand 13 mit dem Pluspol der Batterie verbunden bleibt.

Es ist möglich, die Schaltelemente 13 und 16 in das Hochstromrelais zu integrieren.

Auf einen weiteren Gesichtspunkt ist noch einzugehen. Da bei Fahrzeugen mit sicherheitskritischen elektrischen Verbrauchern die Versorgung mit elektrischer Energie von hoher Bedeutung ist, stehen im Kraftfahrzeug zwar mindestens zwei elektrische Energiequellen, nämlich Batterie und Generator, zur Verfügung, wobei jedoch der Generator nur dann Energie liefert, wenn das Kraftfahrzeug läuft. Andererseits ist die Lebensdauer einer Batterie vom Betrieb abhängig und begrenzt. Fällt die Batterie aus, wie dies im Falle einer Fremdstarthilfe anzunehmen ist, dann kann das Fahrzeug durch eine Fremdstarthilfe zwar wieder gestartet werden, gleichzeitig wird jedoch durch diesen Fremdstart eine funktionierende Batterie lediglich simuliert, während die eigene, im Grunde defekte Batterie keine oder nur eine sehr geringe Pufferwirkung hat und zur Versorgung der sicherheitskritischen Komponenten nicht mehr herangezogen werden kann. Aus diesem Grunde sollte ein Fremdstart des Fahrzeugs erkannt und ausgewertet werden.

Entsprechend der Darstellung der Fig. 2 wird hierfür so vorgegangen, dass die eine Seite des Fremdstartstützpunktes, nämlich der Kontaktanschluss 22 über einen Widerstand 25 definiert auf Masse gezogen wird, falls im Normalfall die Verbindung über die Wicklung des Hochstromrelais 15 und die vorgeschalteten Dioden für die Bildung eines definierten Massepotentials nicht ausreichen sollte.

Die anderen Seite, also der Kontaktanschluss 20 liegt wie üblich an Batteriespannung, beispielsweise über den Widerstand 13, der aber, was auch für die Schaltung der Fig. 1 zutrifft, auch weggelassen werden kann, wenn beispielsweise vom Fremdstartstützpunkt keine eigene Fremdstarthilfe geleistet werden soll, oder davon ausgegangen werden kann, dass eine fremde, an den Fremdstartstützpunkt über die Klemmen des Fremdstarthilfekabels angeschlossene Batterie jedenfalls noch so viel Spannung zu liefern imstande ist, damit das Hochstromrelais 15 anspricht. Dies wird meistens der Fall sein.

Mit dem Kontaktanschluss 22 ist ferner ein Bordnetzsteuergerät 26 verbunden, welches das Potential des Kontaktanschlusses 22 erfasst. Für den Fall, dass kein Fremdstart vorliegt, liegt dieser Punkt auf Massepotential. Wird aber mittels eines Fremdstartkabels ein Fremdstart durchgeführt, so gelangt über die Klemmverbindung das Potential vom Kontaktanschluss 22 auf den Kontaktanschluss 22 und das Potential am Eingang des Bordnetzsteuergeräts 26 erhöht sich auf Batteriespannung.

Erfolgt nun bei angehobenem Potential am Kontaktanschluss 22 ein Motorstart, dann liegt ein Fremdstart vor. In diesem Fall kann dem Fahrer eine Warnmeldung (z.B. Batterie tauschen) gegeben werden. Weiterhin kann, vorzugsweise automatisch über das Bordnetzsteuergerät 26 unmittelbar, das Zuschalten bestimmter elektrischer Verbraucher verboten werden, damit immer ausreichend Energie für sicherheitsrelevante Verbraucher zur Verfügung gestellt werden kann.

Es versteht sich, dass die Abfrage des Potentials am Kontaktanschluss 22 auch zwischen Verpolschutzdiode 16 und Relais 15 erfolgen kann. Desgleichen ist es möglich, die Schaltung der Fig. 2 zur reinen Fremdstarterkennung bei Wegfall des Widerstands 13 (dann ohne Schutzfunktion) einzusetzen. Dabei ist dann der Kontaktanschluss 20 mit dem Bordnetz verbunden.

Zur Unterscheidung, ob ein Fremdstart genommen oder gegeben wurde, können ferner von dem Bordnetzsteuergerät 26 die folgenden Informationen ausgenutzt werden:
- Es sind Startversuche durchgeführt worden; wurden nämlich bereits vorher Startversuche erfolglos durchgeführt, dann kann davon ausgegangen werden, dass ein Fremdstart genommen wurde;
- Ein in einem flüchtigen Speicher gesetztes Bit, welches durch einen vollzogenen Motorstart gesetzt wird und welches durch Wegfall der Spannung zurückgesetzt wird. Ist dieses Bit nicht gesetzt (d.h. ist die Batteriespannung soweit abgesunken, dass der Speicher seine Ladung nicht mehr halten kann) und wird an dem geteilten Fremdstartstützpunkt angeklemmt, so ist ebenfalls von einem Fremdstart auszugehen.

## Patentansprüche

1. Verfahren zur sicheren Fremdstarthilfe bei Bordnetzen von beweglichen Einheiten, Kraftfahrzeugen, Booten und dergleichen, dadurch gekennzeichnet, dass ein Fremdstartstützpunkt (FSS) anfänglich nicht oder nur schwach bestromt wird und erst durch den Anschluss der Klemme eines Starthilfekabels in einen aktiven Zustand überführt wird, in welchem eine direkte galvanische Verbindung mit Bordnetz und/oder Batterie hergestellt ist.

2. Vorrichtung zur sicheren Fremdstarthilfe bei Bordnetzen von beweglichen Einheiten, Kraftfahrzeugen, Booten und dergleichen, gekennzeichnet durch einen Fremdstartstützpunkt (FSS), der durch den Anschluss der Klemme eines Starthilfekabels aktivierbar und hierdurch mit Batterie (10) und/oder Bordnetz (12) direkt verbindbar ist.

3. Vorrichtung nach Anspruch 2, dadurch gekennzeichnet, dass der Fremdstartstützpunkt (FSS) dreiteilig ausgebildet ist, wobei zwei Kontaktbereiche (20, 22) durch einen dazwischenliegenden Isolierbereich (21) galvanisch voneinander getrennt und so ausgebildet sind, dass sie durch die Klemme eines Starthilfekabels galvanisch miteinander verbindbar sind.

4. Vorrichtung nach Anspruch 2 oder 3, dadurch gekennzeichnet, dass der eine Kontaktbereich (20) des Fremdstartstützpunktes über einen Widerstand (13) mit dem Pluspol von Batterie und Bordnetz verbunden ist und parallel hierzu die Schaltstrecke eines Schalters (14) liegt, der von einem Hochstromrelais (15) betätigt ist.

5. Vorrichtung nach Anspruch 4, dadurch gekennzeichnet, dass das Hochstromrelais (15) über eine Verpolschutzdiode und gegebenenfalls über mehrere eine Ansprechschwelle variierende weitere Dioden (17) mit dem anderen Kontaktanschluss (22) des Fremdstartstützpunktes verbunden ist derart, dass bei Herstellen einer galvanischen Verbindung zwischen den Kontaktanschlüssen (20, 22) über das dazwischenliegende Isolierstück (21) mittels einer Anschlussklemme eines Starthilfekabels der Schalter (14) des Hochstromrelais (15) geschlossen wird.

6. Vorrichtung nach einem der Ansprüche 2 bis 5, dadurch gekennzeichnet, dass der gegebenenfalls über einen weiteren Widerstand (25) im Normalfall definiert auf Massepotential gehaltene Kontaktanschluss (22) des Fremdstartstützpunktes mit einem Bordnetz-Steuergerät (26) verbunden ist, welches eine auf Fremdstarteinfluss zurückzuführende Potentialschwankung am Kontaktanschluss (22) des Fremdstartstützpunktes erfasst und im Sinne einer defekten oder verbrauchten fahrzeugeigenen Batterie auswertet, gegebenenfalls in Verbindung mit einer Warnmeldung an den Fahrer und bei Aufrechterhaltung einer für sicherheitsrelevante Verbraucher erforderlichen Energiereserve durch Abschalten sonstiger elektrischer Verbraucher.

7. Vorrichtung nach Anspruch 5 oder 6, dadurch gekennzeichnet, dass das Bordnetz-Steuergerät (26) zur Unterscheidung zwischen genommenen oder gegebenen Fremdstarts die Anzahl vorhergehender erfolgloser Startversuche feststellt und/oder ein ein gesetztes Bit enthaltender flüchtiger Speicher vorgesehen ist, wobei das Bit durch einen vollzogenen Motorstart gesetzt und durch Wegfall der Bordnetzspannung zurückgesetzt wird derart, dass bei nicht gesetztem Bit und benutztem Fremdstartstützpunkt auf Fremdstarthilfe geschlossen wird.
